Europäisches Patentamt

**European Patent Office**

Office européen des brevets

(11) Publication number: **0 060 228**
**B1**

(12) **EUROPEAN PATENT SPECIFICATION**

(45) Date of publication of patent specification: **29.10.86**

(21) Application number: **82830046.7**

(22) Date of filing: **04.03.82**

(51) Int. Cl.⁴: **A 23 G 9/12,** F 25 D 11/02,
A 47 B 77/08

(54) Ice-cream machine.

(30) Priority: **10.03.81 IT 2103281 u**

(43) Date of publication of application:
**15.09.82 Bulletin 82/37**

(45) Publication of the grant of the patent:
**29.10.86 Bulletin 86/44**

(84) Designated Contracting States:
**AT BE CH DE FR GB LI NL SE**

(56) References cited:
**FR-A- 655 058**
**FR-A- 745 968**
**FR-A- 835 707**
**FR-A- 992 457**
**FR-A-1 023 909**
**FR-A-1 024 471**
**FR-A-1 027 714**
**FR-A-1 050 741**
**FR-A-1 206 277**
**FR-A-2 428 804**
**FR-A-2 447 000**
**US-A-3 583 176**

(73) Proprietor: **Cipelletti, Alberto**
**via Emilia**
**Guardamiglio (Milan) (IT)**

(72) Inventor: **Cipelletti, Alberto**
**via Emilia**
**Guardamiglio (Milan) (IT)**

(74) Representative: **Marietti, Giuseppe**
**CENTRO DI CONSULENZA IN PROPRIETA'**
**INDUSTRIALE Viale Caldara, 43**
**I-20122 Milano (IT)**

Courier Press, Leamington Spa, England.

## Description

The present invention relates to an ice-cream machine, particularly suitable for a domestic use.

The ice-cream machines for a domestic use produced till now can be of the type comprising their own refrigerating systems and of the type to be placed into the refrigerator freezer for the necessary ice-cream mixture cooling.

The ice-cream machines of the first type are very cumbersome and heavy and for this reason it can be difficult to house them particularly in the modern houses where the space is very limited. Moreover these first type machines are very expensive and since they are only occasionally used, the buyer often considers them an unjustified expense.

The ice-cream machines of the second type are not as heavy and as cumbersome as the first type machines, but generally people do not have a freezer large enough to contain them or they are compelled to empty their freezer to place the ice-cream machine therein. Moreover, when the ice-cream machines are into the freezer, they take a lot of time to make the ice-cream, since the thermic exchange between the cream mixture and the freezer is very low.

The French Patent No. 1.024.471 (Brown Boveri) shows a refrigerating apparatus having a first chamber for temperatures below 0°C and a second chamber for temperatures above 0°C.

The first chamber can be in the form of a container presenting an upper opening and can be used for preparing ice-cream. The evaporator of the refrigerating system is wound round the container and at least a part of it communicates with the second chamber. In this way the second chamber is directly cooled by the evaporator.

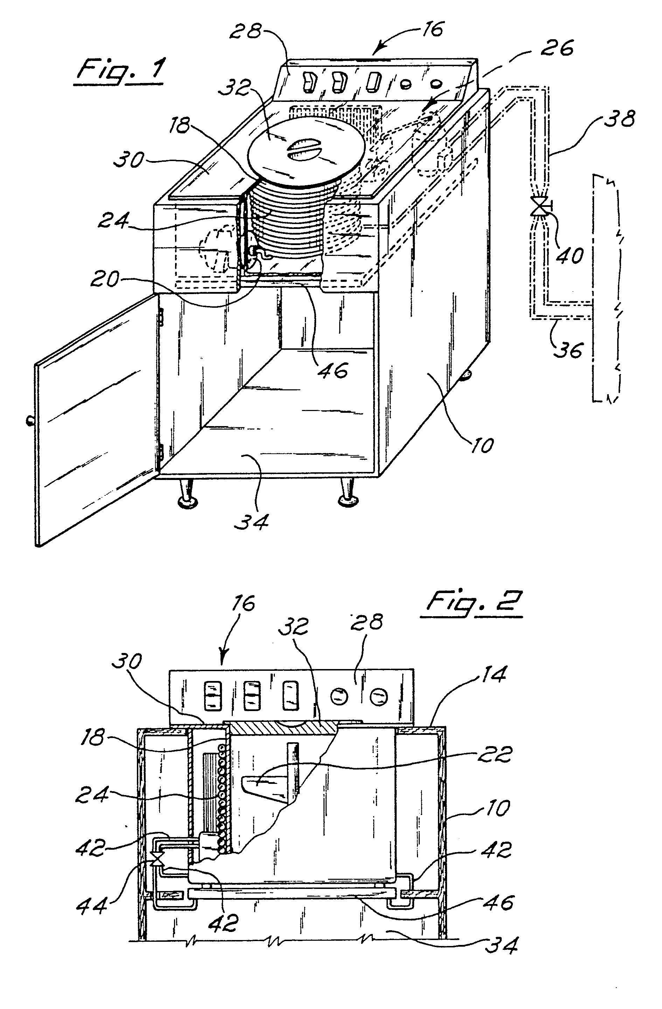

This Brown Boveri apparatus presents a drawback due to the fact that the refrigeration of the second chamber (for temperatures above 0°C) is effected by the same evaporator wound round the basin. Furthermore, when the two chambers are separated from one another by closing the air locks 5 (figures 1 and 4), the absence of insulating material round the evaporator (necessary to cool the second chamber) involves a considerable loss of refrigeration units during the ice-cream preparation. This loss of refrigeration units does not allow a complete refrigeration of the ice-cream basin with the result that the time necessary for the ice-cream preparation is lengthened and the quality of the ice-cream lowered.

The French Utility Model Application No. 2 428 804 (INDUSTRIE ZANUSSI S.p.A.) concerns a refrigerator for a domestic use wherein an upper freezing chamber and an underlying refrigerating chamber are separated from one another by means of an insulated plate having openings that can be opened or closed respectively to put the two chambers in connection to one another or to insulate the two chambers from one another. This apparatus shows something similar to what is shown in figure 4 of the Brown Boveri's Patent and therefore about this apparatus the same remarks can be made.

The French Utility Model Application No. 2 447 000 (PHILCO ITALIANA S.p.A.) concerns a refrigerating apparatus comprising two evaporators connected in series to one another and controllable valve means to feed a cooling medium to the first and second evaporator or only to the second evaporator.

The scope of the present invention is to provide a new kind of ice-cream machine for domestic use which eliminates the drawbacks presented by the prior ice-cream machines, particularly the drawbacks of the ice-cream machines provided with their own refrigerating system.

The aim of the invention is achieved by an ice-cream machine of the type comprising an ice-cream container cooled by a cooling medium fed to the evaporator of a condensing unit refrigerator, the evaporator of the ice-cream container being completely insulated, characterized in that the circuit of the condensing unit refrigerator presents, in parallel with the evaporator of the ice-cream container, a branch for feeding said cooling medium to an external evaporator, said branch being controlled by a valve that alternately and selectively connects the external evaporator or the evaporator of the ice-cream container to the refrigerating circuit.

The side walls of the ice-cream machine according to the invention have an upper laterally protruding edge that sustains the ice-cream machine when it is inserted through an opening provided in the upper horizontal plan of a conventional unit of kitchen furniture. Moreover the external evaporator of the ice-cream machine according to the invention can be attached to the lower horizontal wall of the machine in order to cool the free inner space of the kitchen furniture housing the same ice-cream machine.

The small dimension of the ice-cream machine according to the invention and the particular conformation of its lateral walls allow the ice-cream machine to be housed and enclosed in a conventional unit of kitchen furniture, avoiding any problem of encumbrance.

Said branch and valve of the refrigerating circuit allow the ice-cream machine to be alternately and selectively used to prepare ice-cream or to cool an inner free space of the furniture unit wherein the same machine is housed.

In this way the ice-cream machine can be completely exploited since when it is not used for preparing ice-cream it can be used for feeding with a cooling medium the external evaporator that is in condition of thermal exchange with the inner free space of the kitchen furniture unit housing the same machine.

The figure 1 is a schematical and perspective view of an ice-cream machine enclosed in a unit of kitchen furniture.

The figure 2 is a section along a vertical plane through the ice-cream machine and the unit.

The figure 3 is a perspective view of the set of the figure 1 with detached components.

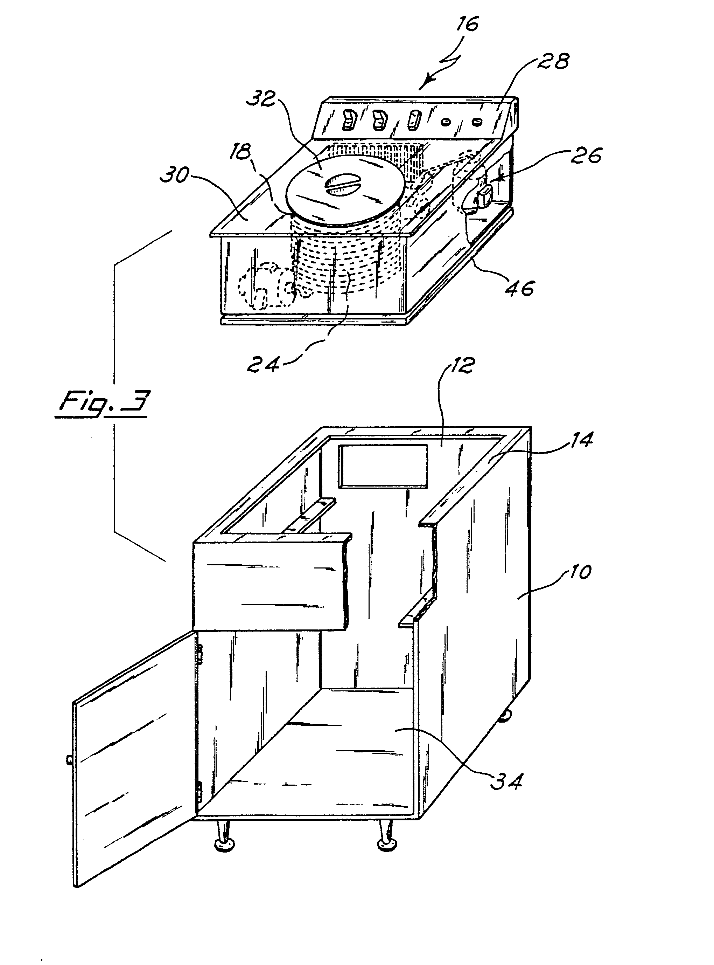

With reference to the figure 3, in the lower plane of a unit of furniture and particularly of a unit of kitchen furniture 10 an opening 12 is provided surrounded by a free edge 14. Through the opening 12, it is possible to insert an enbloc 16 comprising the ice-cream machine, said ice-cream machine comprising an ice-cream container 18 wherein the ice-cream mixture is mixed by means of an agitator 22 operated by an electric motor 20 (figure 1), said container 18 being cooled by a refrigerating coil 24.

The ice-cream machine comprises a condensing unit refrigerator placed inside the enbloc of the machine and a control board 28 is provided to operate the machine.

According to the invention the enbloc 16 is fixed to a lower plate 30 substantially placed at the same level of the mixing container 18, said container opening on the said plate 30 and closed with the cover 32.

The plate 30 presents a larger surface as to the enbloc 16 and when the enbloc is inserted into the opening 20, the plate 30 is supported by the edge 14 of the furniture unit. Substantially the ice-cream machine fills a limited space leaving below it a free volume 34. According to a first advantage of the invention it is possible to house the ice-cream machine avoiding its displacement from a non using position to an operative position. Thus the upper surface of the plate 30 with the cover 32 can be used as a working surface.

The refrigerating unit 26 of the ice-cream machine comprises, in parallel with evaporator 24 of the container 18, a branch 42 controlled by a valve 44. The branch 42 leads into an external evaporator 46 that can be attached to the lower horizontal wall of the machine or placed in the free volume 34 of the kitchen furniture unit 10 housing the same machine. The valve 44 connects, in an alternate and selective way, the external evaporator 46 or the evaporator 24 of the ice-cream container 18.

In this way, when the machine is not used to prepare ice-cream, the refrigerating unit of the same machine can be used to cool the free volume 34 of the kitchen furniture unit. The space 34, by means of insulation, can be maintained at an inner temperature of 6—10°C, suitable for wine, fruit or vegetable storage.

During ice-cream machine operation, refrigeration of the space 34 is interrupted. This interruption, of limited time and of the order of half an hour to one hour, does not create any problem of deterioration of the substances contained therein.

Moreover it is possible to use the refrigerating system of the ice-cream machine for other purposes like, for example, ice-making.

## Claims

1. An ice-cream machine (16) for a domestic use, of the type comprising an ice-cream container (18) cooled by a cooling medium fed to the evaporator (24) of a condensing unit refrigerator, the evaporator of the ice-cream container being in contact with the external walls of the ice-cream container and being completely insulated, characterized in that the circuit of the condensing unit refrigerator presents, in parallel with the evaporator of the ice-cream container, a branch (42) for feeding said cooling medium to an external evaporator (46), said branch being controlled by a valve (44) that alternately and selectively connects the external evaporator (46) or the evaporator of the ice-cream container (18) to the refrigerating circuit.

2. An ice-cream machine according to claim 1, characterized in that its side walls have an upper laterally protruding edge, this edge sustaining the ice-cream machine (16) when inserted through an opening (12) provided in the upper horizontal plane of the kitchen furniture (10).

3. An ice-cream machine according to claim 1 or 2, characterized in that the external evaporator (46) is attached to the lower horizontal wall of the machine (16) and cools a free inner space (34) of the unit of kitchen furniture (10) housing the same ice-cream machine (16).

## Patentansprüche

1. Speiseeismaschine (16) für Hausgebrauch, von der Art bestehend aus einem Speiseeisbehälter (18), der durch ein dem Verdampfer (24) eines Kondensationseinheitskühlers zugeführtes Kühlmittel abgekühlt ist, wobei der Speiseeisbehälterverdampfer in Berührung mit den Aussenwänden des Speiseeisbehälters und vollständig isoliert ist, dadurch gekennzeichnet, dass der Kreis des Kondensationseinheitskühlers eine parallel zum Speiseeisbehälterverdampfer angeordnete Zweigleitung (42) aufweist, um das Kühlmittel einem Aussenverdampfer (46) zuzuführen, wobei die Zweigleitung durch ein (44) kontrolliert ist, das wechselnd und selektiv den Aussenverdampfer (46) oder den Verdampfer des Speiseeisbehälters (18) mit dem Kühlkreis verbindet.

2. Speiseeismaschine nach Anspruch 1, dadurch gekennzeichnet, dass die Seitenwände der Maschine eine obere auf der Seite vorstehende Kante besitzt, die die Speiseeismaschine abstützt, wenn die Kante durch eine in die obere waagerechte Küchenmöbelplatte (10) angebrachte Öffnung (12) eingesetzt wird.

3. Speiseeismaschine nach Anspruch 1 oder 2, dadurch gekennzeichnet, dass der Aussenverdampfer (46) mit der unteren waagerechten Wand der Maschine (16) verbunden ist und einen freien Raum (34) des die Speiseeismaschine (16) lagernden Küchenmöbelstücks (10) abkühlt.

**Revendications**

1. Appareil à usage domestique (16) pour la fabrication de glace alimentaire, du type comprenant un récipient (18) de la glace, qui est réfroidi par un milieu réfrigerant alimenté à l'évaporateur (24) d'une unité frigorifique condensation, l'évaporateur dudit récipient pour la glace étant en contact avec les parois extérieures du récipient et complétement isolé, caractérisé en ce que le circuit de l'unité frigorifique à condensation comprend, en parallèle avec l'évaporateur du récipient de la glace, une branche (42) pour alimenter ledit milieur réfrigerant à un évaporateur éxterieur (46), ladite branche étant controlée par une soupape (44) qui accouple alternativement et sélectivement l'évaporateur du récipient de la glace (18) au circuit frigorifique.

2. Appareil pour la glace alimentaire sélon la révendication 1, caractérisé en ce que ses parois laterales ont un bord superieur qui fait saillie lateralement, ce bord soutenant l'appareil (16) lorsqu'il est inséré dans une ouverture (12) formée dans le plan horizontal supérieur d'une meuble du cuisine (10).

3. Appareil pour la glace alimentaire sélon la révendication 1 ou 2, caractérisé en ce que l'évaporateur éxterieur (46) est fixé à la parois inférieure horizontale de l'appareil (16) and réfroidit un espace intérieur libre (34) de l'unité d'ameublement de cuisine (10) qui loge le meme appareil (16).

Fig. 1

Fig. 2

*Fig.3*